# EUROPEAN PATENT APPLICATION

(11) **EP 4 335 730 A1**
(43) Date of publication of application: **13.03.2024**
(21) Application number: 22871153.7
(22) Date of filing: 31.10.2022
(51) Int. Cl.: B62D 25/20, B60N 2/015

(54) **REAR FLOOR ASSEMBLY AND VEHICLE**

(30) Priority: 20.07.2022 CN 202210863662
(71) Applicant: Voyah Automobile Technology Company Ltd., Hanyang District Wuhan City, Hubei 430050 (CN)
(72) Inventor: YANG, Mei, Wuhan, Hubei 430050 (CN); WANG, Shuangqun, Wuhan, Hubei 430050 (CN); HOU, Chunsheng, Wuhan, Hubei 430050 (CN); ZHAI, Huan, Wuhan, Hubei 430050 (CN); ZHOU, Zhongbiao, Wuhan, Hubei 430050 (CN)
(74) Representative: Sach, Greg Robert
(86) International application number: PCT/CN2022/128809
(87) International publication number: WO 2024/016512

(57) **Abstract**

Disclosed herein are a rear floor assembly and a vehicle to solve the problem of long development cycle and high cost in vehicle development. The rear floor assembly (1000) includes a rear floor panel (100), a longitudinal beam (900), a first lateral beam (700), a second lateral beam (800), a third lateral beam (200), a fourth lateral beam (300) and a fifth lateral beam (500), as well as a connecting longitudinal beam (400). The third lateral beam (200), the connecting longitudinal beam (400) and the fourth lateral beam (300) are connected in turn and are all located on an upper surface of the rear floor panel (100) to form a rear seat installation structure. The second lateral beam (800) and the fifth lateral beam (500) are both connected to a lower surface of the rear floor panel (100). The rear floor assembly (1000) provided in this disclosure not only meets requirements for installation function of different vehicle models, but also meets performance requirements of different vehicle models for a whole vehicle mode, a whole vehicle bending and torsion and a whole vehicle collision safety.

## Description

### CROSS-REFERENCE TO RELATED APPLICATIONS

The disclosure claims the priority of the Chinese patent application No. 202210863662.6, filed on July 20, 2022 and entitled "a rear floor assembly and a vehicle", the whole disclosure of which is incorporated herein by reference.

### TECHNICAL FIELD

The disclosure relates to a rear floor assembly and a vehicle, belonging to the technical field of a vehicle body structure.

### BACKGROUND

With the development of the automobile industry, in order to shorten the development cycle and reduce the development cost, automobile development has gradually developed from single model development to platform development. Platform and universal design is mainly to adapt to the trend of market demand in automobile market from a mass and single vehicle model into a small batch and multi variety of vehicle models, and product design is the beginning and foundation of platformization and universalization.

As an important part of automobile platformization, the rear floor assembly plays an important role in vehicle function and vehicle performance. Especially when it comes to the installation of seats, since the structure of seats varies little from a model of vehicle to another model of vehicle. If different seat installation structures are developed according to different vehicle models, the development cycle of the whole vehicle will become longer and the cost will become higher.

### SUMMARY

This disclosure provides a rear floor assembly and a vehicle, which can solve the technical problem of long vehicle development cycle and high cost to some degree.

According to an aspect of this disclosure, a rear floor assembly is provided including a rear floor panel and a rear floor skeleton connected to each other; the rear floor skeleton includes two longitudinal beams arranged along a width direction of a vehicle, and a first lateral beam, a second lateral beam, a third lateral beam, a connecting longitudinal beam, a fourth lateral beam and a fifth lateral beam arranged at intervals along a length direction of the vehicle; and where the first lateral beam, the second lateral beam, the third lateral beam, the fourth lateral beam and the fifth lateral beam are all connected to the longitudinal beam. The third lateral beam, the connecting longitudinal beam and the fourth lateral beam are connected in turn and are all disposed on an upper surface of the rear floor panel; the second lateral beam and the fifth lateral beam are both connected to a lower surface of the rear floor panel.

According to another aspect of this disclosure, a vehicle is provided including a side enclosure assembly and the rear floor assembly of the first aspect. The third lateral beam of the rear floor assembly is connected to the C-pillar of the side enclosure assembly.

### BRIEF DESCRIPTION OF DRAWINGS

FIG. 1 shows an explosive diagram of a rear floor assembly according to one or more embodiments of the disclosure.
FIG. 2 shows a structural diagram of the rear floor assembly of FIG. 1 with longitudinal beams removed.
FIG. 3 shows an explosive diagram of the rear floor assembly shown in FIG. 2.
FIG. 4 shows a schematic structural diagram of the rear floor assembly of FIG. 1 from another perspective with longitudinal beams removed.
FIG. 5 shows a structural diagram of a first lateral beam in the rear floor assembly of FIG. 1.
FIG. 6 shows an explosive diagram of a third lateral beam in the rear floor assembly of FIG.1.
FIG. 7 shows a structural diagram of the longitudinal beam in the rear floor assembly of FIG. 1.
FIG. 8 shows an explosive diagram of the longitudinal beam in the rear floor assembly of FIG. 1.
FIG. 9 shows a magnified diagram of an "A" part in FIG. 7.
FIG. 10 shows an installation structural diagram of a protective beam of a vehicle according to one or more embodiments of the disclosure.

Reference numerals: 1000-rear floor assembly; 1100-rear floor skeleton; 100-rear floor panel; 110-convex part; 111-first convex subpart; 112-second convex subpart; 120-cavity; 130-passenger compartment floor; 140-trunk floor; 150-storage chamber; 160-step structure; 200-third lateral beam; 210-main beam; 220-first reinforcement plate; 230-second reinforcement plate; 300-fourth lateral beam; 400-connecting longitudinal beams; 500-fifth lateral beam; 510-small longitudinal beam; 600-back enclosure plate assembly; 700-first lateral beam; 710-gap part; 720-main positioning hole; 730-middle channel connector; 800-second lateral beam; 900-longitudinal beam; 910-front segment; 920-middle segment; 921-upper plate; 922-lower plate; 930-rear segment; 940-reinforcement plate.
2000-protective beam; 3000-side enclosure assembly; 4000-rear seat; 5000-protective framework.

### DESCRIPTION OF EMBODIMENTS

In the present field, a length direction of a vehicle is usually called an X direction or longitudinal direction, a width direction of the vehicle is called a Y direction or lateral direction, and a height direction of the vehicle is called a Z direction or vertical direction. Reference may made to the above for the interpretation of the relevant orientation expressions in the following text.

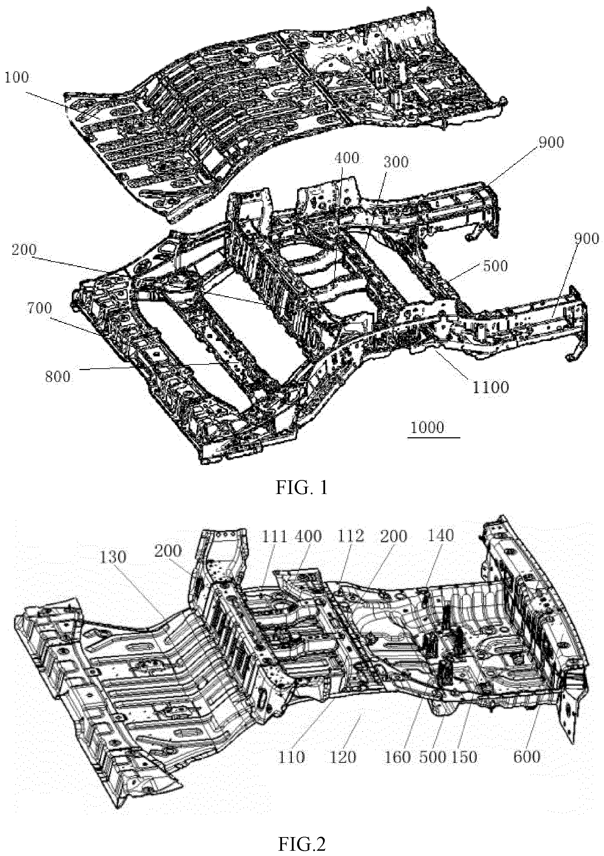

As shown in FIG. 1 to FIG. 4, in a first aspect of this disclosure, a rear floor assembly 1000 is provided, including a rear floor panel 100 and a rear floor skeleton 1100, and the rear floor panel 100 and the rear floor skeleton 1100 are connected to each other. The rear floor skeleton 1100 adopts a frame structure of "two longitudinal and five lateral", including two longitudinal beams 900 arranged along the width direction of the vehicle, and a first lateral beam 700, a second lateral beam 800, a third lateral beam 200, a fourth lateral beam 300 and a fifth lateral beam 500 arranged at intervals along the length direction of the vehicle. The rear floor skeleton 1100 also includes at least one connecting longitudinal beam 400. The first lateral beam 700, the second lateral beam 800, the third lateral beam 200, the fourth lateral beam 300 and the fifth lateral beam 500 are all connected to the longitudinal beams 900 to form a main frame. The third lateral beam 200, the connecting longitudinal beam 400 and the fourth lateral beam 300 are connected in turn and are all disposed on an upper surface of the rear floor panel 100 to form a rear seat installation structure. An axial length of the connecting longitudinal beam 400 may be selected according to different vehicle models. The second lateral beam 800 and the fifth lateral beam 500 are both connected to a lower surface of the rear floor panel 100. The second lateral beam 800 plays the role of strengthening the floor panel 100 and installing a second row of seats. The fifth lateral beam 500 also plays the role of strengthening the floor panel 100.

Therefore, the rear floor assembly 1000 provided by the present disclosure, by providing the second lateral beam 800, the third lateral beam 200 and the fourth lateral beam 300, can meet the installation requirements of two rows of seats and three rows of seats; by providing the connecting longitudinal beam 400, may select an axial length of the connecting longitudinal beam 400 according to different vehicle models; by providing the second lateral beam 800 and the fifth lateral beam 500, improves the dynamic stiffness of the rear floor panel 100. The rear floor assembly 1000 according to one or more embodiments of the present disclosure not only meets the installation function requirements of different vehicle models, but also meets performance requirements of different vehicle models for a whole vehicle mode, a whole vehicle bending moment, and a whole vehicle collision safety, realizing the universal design of the rear floor assembly 1000.

The first lateral beam 700 of the rear floor skeleton 1100 is a front lateral beam of a rear floor. The first lateral beam 700 is located at a front end of the rear floor assembly 1000, and is used to support a rear seat or a second row of seats of a vehicle of a MPV (multi-Purpose Vehicles, abbreviated as MPV) model. The first lateral beam 700 may be divided into an upper part and a lower part, and be arranged with slide rail installation holes for the second row of seats. Several bearing plates are arranged in a cavity of the lateral beam to improve a front floor mode and a dynamic stiffness of a seat installation point. In some embodiments, the first lateral beam 700 is raised in the Z direction due to an anti-sinking requirement of human body in the second row of seats, that is, a height of a top surface of the first lateral beam 700 is higher than a height of a middle area of the rear floor panel 100.

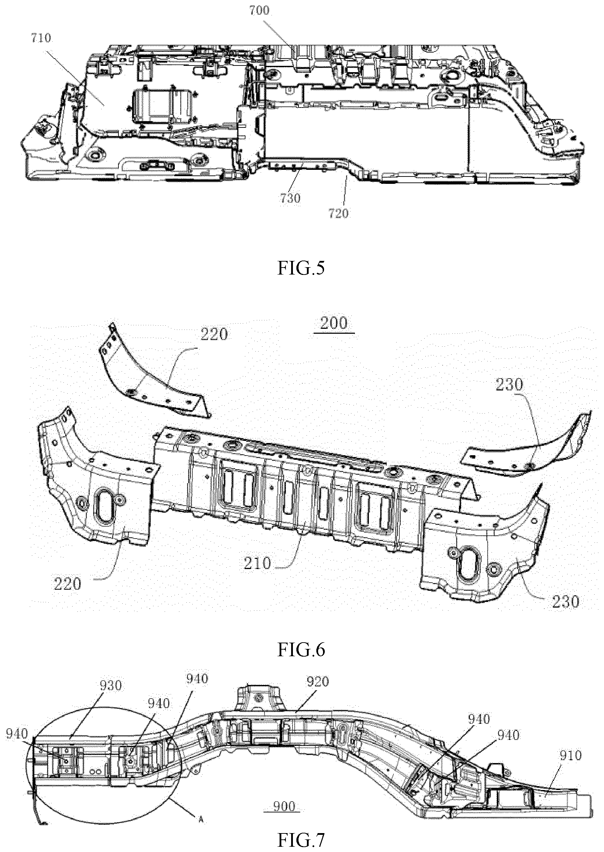

Referring to FIG. 5, in some embodiments, one end of the first lateral beam 700 is provided with a gap part 710. The gap part 710 is used to install a leg rest component or a leg rest profiling member. The leg rest profiling member only has an external border of the leg rest component, but does not have a function of a leg rest. The specific structure of the leg rest component can refer to the relevant disclosure of the existing technology, which is not limited in this disclosure. In a first aspect, because a same vehicle is usually provided with a low-configured version and a high-configured version, a vehicle body skeleton can be versatile in the high-configured version and the low-configured version by the design of the leg rest component or the leg rest profiling member. In a second aspect, the leg rest component or the leg rest profiling member is filled in the gap part 710, which can support a seat well, and the leg rest component or the leg rest profiling member is also of a rigid structure, which can make up for a strength reduction caused by setting the gap part 710 of the first lateral beam 700 to a certain extent. In a third aspect, by setting the gap part 710, a leg rest can be built into a vehicle body, thus the leg rest will not occupy a space of the passenger compartment, which increases a leg space of a rear passenger and improves a ride comfort. Compared with an existing technology in which a leg rest is integrated in a seat or directly installed on a front end surface of a lateral beam, and a longitudinal thickness of a carpet in the same row of seats will be thickened at locations except for the leg rest for maintaining aesthetics, the rear floor assembly 1000 according to one or more embodiments of the disclosure, can avoid a thickening of a longitudinal thickness of a carpet due to a built-in leg rest, which reduces the whole vehicle cost.

In one or more embodiments, the gap part 710 is formed by shortening the first lateral beam 700 such that a cavity between an end face of the first lateral beam 700 and the rear floor panel 100 is formed, thus the cavity constitutes the gap part 710. In other embodiments, the first lateral beam 700 can also be partially hollowed out to form the gap part 710, that is, the gap part 710 is formed by a local concave of the first lateral beam 700.In some other embodiments, the first lateral beam 700 includes an upper plate and a lower plate, and a length of the upper plate is set to be shorter than that of the lower plate, so that gap part 710 can be formed among the lower plate, an end face of the upper plate and the rear floor panel 100. The gap part 710 may also adopt other structural forms, not exhaustive here.

In some embodiments, referring to FIG. 5, the middle of the first lateral beam 700 is provided with a main positioning hole 720, and the first lateral beam 700 is provided with a middle channel connector 730. The middle channel connector 730 is connected in the main positioning hole 720. An independent middle channel connector 730 can be provided. The middle channel connector 730 can be adapted to a front floor of different configurations by changing a profile of the middle channel connector 730, so that the main positioning hole 720 of the first lateral beam 700 can still be the same for two vehicle models with large differences in profile, so as to realize versatility of fixtures and transportation equipment, thereby reducing equipment investment.

Referring to FIG. 1, the second lateral beam 800 of the rear floor skeleton 1100 is a middle lateral beam of the rear floor and is located below the middle of the rear floor. The second lateral beam is arranged with a fuel tank mounting bracket and a seat mounting point thereon. The second lateral beam at a left side and a right side connects front mounting points of a rear subframe to ensure its dynamic stiffness in installation. In one or more embodiments, the second lateral beam 800 includes a lateral beam body and joints connected to two ends of the lateral beam body. A lateral beam body can be adapted to different vehicle models by adjusting its position, and a lateral beam is universalized by adjusting the joints at both ends of a lateral beam body.

The third lateral beam 200 of the rear floor skeleton 1100 is a lateral beam assembly for a rear seat backrest, is located in a C loop position of a whole vehicle, connects a left wheel cover and a right wheel cover, and connects with a C-pillar chamber and a roof cover lateral beam to form a closed force transmission path. The third lateral beam plays an irreplaceable role in improving a dynamic stiffness of a rear suspension installation point, a bending and torsion stiffness and a mode of a whole vehicle. In a vehicle of a MPV model, the third lateral beam 200 is located below a third row of seats, supports human thighs of a person in a third row of seats, and provides installation points for seats. In a vehicle of car model, the third lateral beam 200 is located behind a second row of seat backrests, providing a backrest support and a seat installation.

In one or more embodiments, referring to FIG. 6, the third lateral beam 200 includes a main beam 210, and a first reinforcement plate 220 and a second reinforcement plate 230 which are connected to two ends of the main beam 210. Two longitudinal beams 900 are connected to two ends of the main beam 210 respectively; the first reinforcement plate 220 and the second reinforcement plate 230 are used to be connected with a C-pillar of a vehicle. In some embodiments, the first reinforcement plate 220 and the second reinforcement plate 230 are connected to the longitudinal beam 400, the main beam 210 and a C-pillar inner plate at the same time to strengthen a structure of a C-pillar loop. Considering a processing technology, the first reinforcement plate 220 and the second reinforcement plate 230 may adopt an integrated structure or a split structure.

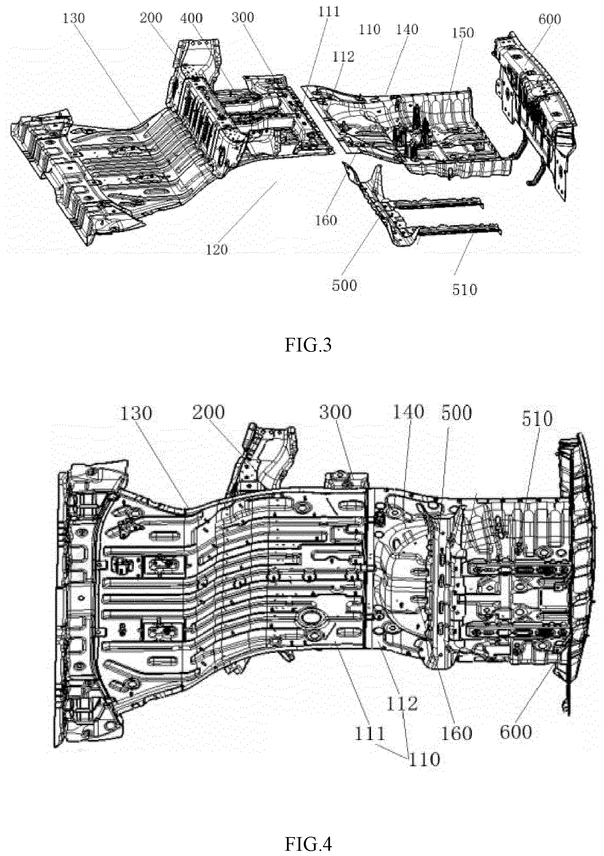

The fourth lateral beam 300 of the rear floor skeleton 1100 is a lateral beam for mounting the third row of seats, provides a Y-direction support for a rear suspension spring and meets installation requirements of the third row of seats and seat belts of a vehicle of a MPV model at the same time. In one or more embodiments, referring to FIG. 4, the fourth lateral beam 300 and the third lateral beam 200 are connected by the connecting longitudinal beam 400 to form a stable quadrilateral structure. which satisfies a stiffness of a seat installation point and improves a floor mode so as to ensure a safety of human bodies in three rows of seats under high-speed rear impact. The connecting longitudinal beam 400 is located between the third lateral beam 200 and the fourth lateral beam 300. A number of the connecting longitudinal beams 400 is determined according to actual requirements of a seat installation.

The fifth lateral beam 500 of the rear floor skeleton 1100 is a rear lateral beam of the rear floor. A long rear suspension size of a vehicle model can achieve superior trunk volume, but also puts forward higher requirements for a stiffness and a mode of the rear floor. Providing the fifth lateral beam 500 can take into account of the trunk volume and the stiffness and mode of the rear floor at the same time. In one or more embodiments, the fifth lateral beam 500 is disposed below a rear load-bearing floor, and the fifth lateral beam 500 is disposed below an area of a spare tire compartment to connect a rear installation point of a rear subframe. At the same time, through two small longitudinal beams 510 located below a rear load-bearing floor and connecting the rear floor rear beam (the fifth lateral beam 500) and a back enclosure plate assembly 600, it can ensure a stiffness of a rear load-bearing floor and a dynamic stiffness of installation points of a rear charger and an air tank.

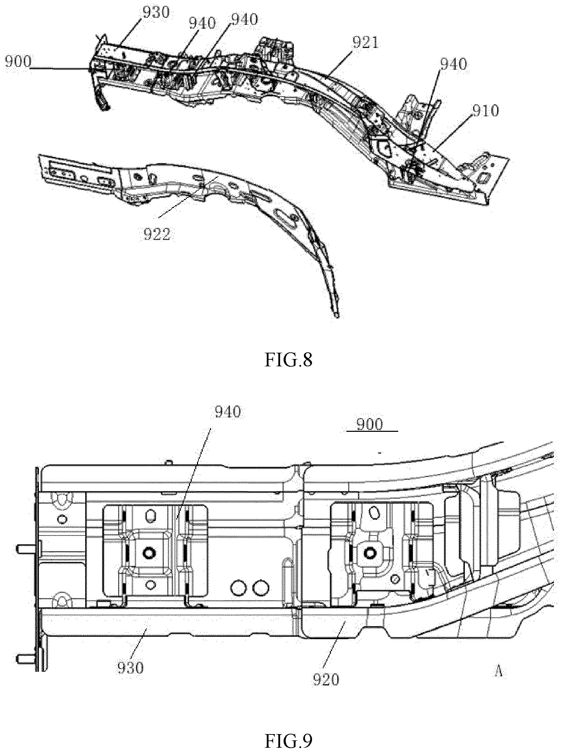

Referring to FIG.7 and FIG.8, the longitudinal beam 900 of the rear floor skeleton 1100 includes a front segment 910, a middle section 920 and a rear segment 930 which are connected in turn. The first lateral beam 700 is connected to the front segment 910, and the fifth lateral beam 500 is connected to the rear segment 930. The front segment 910 and the rear segment 930 of the longitudinal beam 900 are adapted to different wheelbases and different rear suspension lengths of different platform vehicle models by adjusting an overlap of parts and a length. While the middle segment 920 of the longitudinal beam 900, including an installation point structure for a rear subframe, a rear suspension spring and a rear seat on the middle segment 920 of the longitudinal beam 900 except some parts lapped with the wheel cover, can realize versatility to the maximum extent. In one or more embodiments, referring to FIG. 9, at least one of the front segment 910, the middle segment 920, and the rear segment 930 is equipped with at least one reinforcement plate 940 inside thereof. A position of the reinforcement plate 940 depends on a position of each installation point. In addition, for the cavity of the longitudinal beam 900 with a relatively long axial length, an additional reinforcement plate may also be provided.

In one or more embodiments, referring to FIG. 8, the middle segment 920 of the longitudinal beam 900 includes an upper plate 921 and a lower plate 922, where the upper plate 921 is a thermoformed plate, the lower plate 922 is a thermoformed plate of varying material thickness. In one or more embodiments, the lower plate 922 adopts four sections of flexible rolled steel plate with unequal material thickness. The upper plate 921 and the lower plate 922 are tailor-welded together, and the lower plate 922 of the rear longitudinal beam 900 adopts the process of thermoforming with variable material thickness, which meets requirements of a whole vehicle lightweight and a whole vehicle performance.

In one or more embodiments, referring to FIG. 3 and FIG. 4, a middle of the rear floor panel 100 includes an upwardly raised convex part 110, where a cavity below the convex part 110 is used for placing a drive motor. The third lateral beam 200, the connecting longitudinal beam 400 and the fourth lateral beam 300 are all connected to an upper surface of the convex part 110. This structure is suitable for MPV models, that is, the front segment 910 of the rear floor assembly 1000 is made to be horizontal to adapt to an X direction adjustment of a slide rail of the second row of seats, and a rear part of the rear floor assembly is raised to meet a placement of a rear motor.

Because the middle of the rear floor assembly 1000 is the upwardly raised convex part 110, a cavity 120 is formed below the convex part 110. A drive motor is placed within the cavity 120 below the convex part 110 assembly. On the one hand, it provides an installation space for the drive motor; on the other hand, the drive motor is isolated on the outside of the passenger compartment to avoid a noise of the drive motor from affecting occupants in the passenger compartment. At the same time, because the third lateral beam 200 and the fourth lateral beam 300 are connected to the convex part 110, a rear seat is disposed at the convex part 110, so that there is no need to provide a support structure to support the rear seat. Instead, the convex part 110 is directly used to support the rear seat, so that a height of the rear seat can meet ride requirements. Therefore, the rear floor assembly 1000 can set the drive motor below the rear floor assembly 1000, that is, the drive motor is additionally disposed at a rear end of a vehicle without affecting a space of a passenger compartment.

In one or more embodiments, a front of the rear floor panel 100 includes an upwardly raised anti-sinking structure. This structure is suitable for a car model, that is, a front section of the rear floor panel 100 is raised to meet an anti-sinking requirement of human bodies in the second row.

In one or more embodiments, referring to FIG. 4, the rear floor panel 100 is divided into a passenger compartment floor 130 and a trunk floor 140 due to its long size. The third lateral beam 200, the connecting longitudinal beam 400 and the fourth lateral beam 300 are all connected to an upper surface of the passenger compartment floor 130. The trunk floor 140 is connected to a rear end of the passenger compartment floor 130, and the trunk floor 140 is at least partially recessed downwards to form a cargo storage chamber. The fifth lateral beam 500 is connected to a lower surface of the cargo storage chamber.

Referring to FIG. 4, the rear end of the passenger compartment floor 130 is connected to a front end of the trunk floor 140, and the trunk floor 140 is at least partially recessed to form a cargo storage chamber 150. The rear floor assembly 1000 adopts a split structure to facilitate manufacture and installation. In particular, when the rear floor assembly 1000 is applied to a seven-seat vehicle, because the overall length of the seven-seat vehicle is longer, the rear floor assembly 1000 is also longer, and it is more appropriate to adopt the split structure. The seven-seat vehicle is generally equipped with three rows of seats. A rear lateral beam of a second row of seats of the three rows of seats is disposed at the front end of the passenger compartment floor 130, and the front end of the passenger compartment floor 130 is flat as a whole, which can realize the horizontal movement and adjustment of the second row of seats along the X direction of the vehicle. The third lateral beam 200 and the fourth lateral beam 300 can be used as a front lateral beam and a rear lateral beam of the third row of seats of the seven-seat vehicle.

In one or more embodiments, due to the characteristics of an overall structure of a vehicle, at least part of a structure of the trunk floor 140 can be set to be recessed downward. A recessed structure of the trunk floor 140 is the storage chamber 150. The storage chamber 150 is generally used for storing articles, such as for placing spare tires, tire repair tools, inflatable tools, etc.

In one or more embodiments, referring to FIG. 4, the rear end of the passenger compartment floor 130 includes a first convex subpart 111. The front end of the trunk floor 140 includes a second convex subpart 112. The first convex subpart 111 of the passenger compartment floor 130 is connected with the second convex subpart 112 of the trunk floor 140 to form the convex part 110 of the rear floor assembly 1000. The convex part 110 in the middle of the rear floor assembly 1000 includes the first convex subpart 111 at the rear end of the passenger compartment floor 130 and the second convex subpart 112 at the front end of the trunk floor 140. The front end of the passenger compartment floor 130 is relatively flat, which can be used to install a rear lateral beam of a front seat, so as to realize a movement adjustment of the front seat along the X direction of a vehicle. The rear end of the trunk floor 140 is a storage chamber 150 recessed downward.

In one or more embodiments, the fourth lateral beam 300 is positioned at a connection part of the first convex subpart 111 with the second convex subpart 112, that is, at a connection part of the rear end of the passenger compartment floor 130 with the front end of the trunk floor 140. The rear end of the passenger compartment floor 130 is generally set above the trunk floor 140, and the fourth lateral beam 300 is connected to the connection part of the rear end of the passenger compartment floor 130 with the front end of the trunk floor 140, thus this structure can provide better support for a rear seat and improve an overall structural stability of the rear floor assembly 1000.

In some embodiments, the fourth lateral beam 300, the passenger compartment floor 130 and the trunk floor 140 are welded together to ensure connection stability. The above three have common welding spots to reduce a number of welding spots and reduce welding procedures. In one or more embodiments, the fourth lateral beam 300, the passenger compartment floor 130 and the trunk floor 140 can also be connected by bolt connection, snap-in connection and other connection forms, which is not limited in this disclosure.

In order to realize the versatility of parts, the front section of the trunk floor 140 is made to have a same profile for a vehicle of MPV model and a vehicle of car model, but a boundary of a rear section of the trunk floor 140 changes with a length of a rear suspension of different vehicle models. At the same time, an X coordinate and a Y coordinate of the main positioning hole 720 of the rear floor panel assembly 100 for vehicles of two vehicle models are consistent, so as to maximize a versatility of a mold, a fixture and an inspection tool.

Therefore, the rear floor assembly 1000 provided according to one or more embodiments of this disclosure can improve a performance of a whole vehicle and realize a maximum versatility of the rear floor assembly under a premise of meeting requirements of installation function of different vehicle models, thus reducing a development cost, shortening a development cycle and saving an investment for production equipment.

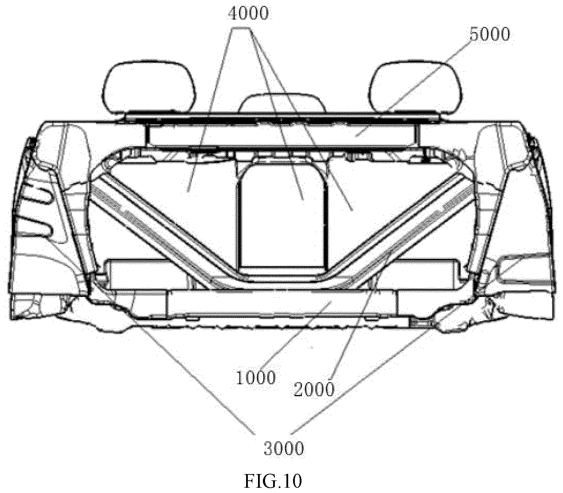

In the second aspect of this disclosure, a vehicle is provided, including a side enclosure assembly 3000 and the rear floor assembly 1000 in the first aspect above. Referring to FIG. 10, the third lateral beam 200 of the rear floor assembly 1000 is connected to a C-pillar of the side enclosure assembly 3000 to form a C-pillar loop, in order to increase the body stiffness.

Referring to FIG. 10, in some embodiments, the vehicle also includes a protective beam 2000 disposed between a trunk and a passenger compartment. A bottom of the protective beam 2000 is connected with the fourth lateral beam 300, and a top of the protective beam 2000 is connected to the side enclosure assembly 3000. The protective beam 2000 as a whole has an axisymmetric structure such as a V-shape, U-shape, H-shape or W-shape, and a specific shape is not limited in this disclosure.

The protective beam 2000 is arranged, such that a rear floor lateral beam, the protective beam 2000 and the side enclosure assembly 3000 are connected to form a protective frame. Because the rear floor lateral beam is disposed below a back of a rear seat 4000, and the protective beam 2000 is disposed between the trunk and the passenger compartment, so that the protective frame 5000 is disposed on the back of the rear seat 4000 to protect the back of the whole rear seat 4000. Compared with a steel plate on a back of a rear seat in the related technology, the protective beam 2000 has better impact resistance and lower weight, which reduces weight of a whole vehicle. Therefore, when the vehicle has emergency braking or impact, the protective beam 2000 can prevent articles in the trunk from impacting the rear seat, therefore avoiding an occupant from being hurt, and protecting personal safety of the occupant.

According to the rear floor assembly provided by one or more embodiments of this disclosure, this disclosure has the following beneficial effects or advantages:
1) For the proposed rear floor assembly 1000, the middle segment 920 of the longitudinal beam 900, the third lateral beam 200, the fourth lateral beam 300 and the fifth lateral beam 500 can all be commonly used for MPV models and car models, and main positioning holes of other assemblies also remain consistent, thus realizing a versatility, shortening a development cycle, reducing a development cost, and saving an investment in tooling fixtures and production equipment.
2) The rear floor assembly 1000 proposed in this disclosure adopts a skeleton layout of two longitudinal beams 900 plus five lateral beams to meet a stiffness and strength of key installation points, improve a bending and torsion stiffness and a mode of a whole vehicle, ensure a ride comfort, and ensure a safety of human bodies in three rows of seats under high-speed rear impact.
3) The rear floor assembly 1000 proposed in this disclosure realizes a lightweight of a rear body by adopting a thermoformed lower plate 922 of the longitudinal beam 900 with variable material thickness.

Although the preferred embodiments of this disclosure have been described, additional changes and modifications to these embodiments may be made by those skilled in the art once they learn the basic creative concepts. Therefore, the attached claims are intended to be interpreted to cover preferred embodiments and all changes and modifications that fall within the scope of this disclosure.

Obviously, those skilled in the art can make various changes and variations to this disclosure without departing from the spirit and scope of this disclosure. Thus, if these modifications and variants of this disclosure fall within the scope of the claims and its equivalent technology of this disclosure, this disclosure also intends to cover these modifications and variants.

## Claims

1. A rear floor assembly, **characterized by** comprising:
a rear floor panel and a rear floor skeleton connected to each other, wherein the rear floor skeleton comprises two longitudinal beams arranged along a width direction of a vehicle, and a first lateral beam, a second lateral beam, a third lateral beam, a connecting longitudinal beam, a fourth lateral beam and a fifth lateral beam arranged at intervals along a length direction of the vehicle;
and wherein the first lateral beam, the second lateral beam, the third lateral beam, the fourth lateral beam and the fifth lateral beam are all connected to the longitudinal beam; and the third lateral beam, the connecting longitudinal beam and the fourth lateral beam are connected in turn and all disposed on an upper surface of the rear floor panel, and the second lateral beam and the fifth lateral beam are both connected to a lower surface of the rear floor panel.

2. The rear floor assembly of claim 1, wherein a middle of the rear floor panel comprises an upwardly raised convex part, and a cavity below the convex part is used for placing a drive motor; the third lateral beam, the connecting longitudinal beam and the fourth lateral beam are all connected to an upper surface of the convex part; or
a front of the rear floor panel comprises an upwardly raised anti-sinking structure.

3. The rear floor assembly of claim 2, wherein the rear floor panel comprises:
a passenger compartment floor, an upper surface of which the third lateral beam, the connecting longitudinal beam and the fourth lateral beam are all connected to; and
a trunk floor, which is connected to a rear end of the passenger compartment floor, and is at least partially recessed downwards to form a cargo storage chamber; the fifth lateral beam being connected to a lower surface of the cargo storage chamber.

4. The rear floor assembly of claim 3, wherein the fourth lateral beam, the passenger compartment floor and the trunk floor are welded together.

5. The rear floor assembly of any one of claims 1-4, wherein the third lateral beam comprises a main beam, and a first reinforcement plate and a second reinforcement plate which are connected to two ends of the main beam; two longitudinal beams are connected to the two ends of the main beam respectively; the first reinforcement plate and the second reinforcement plate are used to connect a C-pillar of the vehicle.

6. The rear floor assembly of any one of claims 1-4, wherein one end of the first lateral beam is provided with a gap part, and the gap part is provided with a leg rest component or a leg rest profiling member therein; and
a middle of the first lateral beam is provided with a main positioning hole, and the first lateral beam is provided with a middle channel connector which is connected in the main positioning hole.

7. The rear floor assembly of any one of claims 1-4, wherein the longitudinal beam comprises a front segment, a middle section and a rear segment connected in turn; the first lateral beam is connected to the front segment, and the fifth lateral beam is connected to the rear segment; and at least one of the front segment, the middle segment, and the rear segment is equipped with at least one reinforcement plate therein.

8. The rear floor assembly of claim 7, wherein the middle segment comprises an upper plate and a lower plate, and wherein the upper plate is a thermoformed plate, and the lower plate is a thermoformed plate of varying material thickness.

9. A vehicle, comprising a side enclosure assembly and the rear floor assembly of any one of claims 1-8, and the third lateral beam of the rear floor assembly is connected to a C-pillar of the side enclosure assembly.

10. The vehicle of claim 9, wherein the vehicle further comprises a protective beam disposed between the trunk and the passenger compartment; and a bottom of the protective beam is connected to the fourth lateral beam, and a top of the protective beam is connected to the side enclosure assembly.
